# EUROPÄISCHE PATENTSCHRIFT

(11) **EP 2 687 830 B1**
(45) Veröffentlichungstag und Bekanntmachung des Hinweises auf die Patenterteilung: **12.10.2022**
(21) Anmeldenummer: 13002524.0
(22) Anmeldetag: 14.05.2013
(51) Int. Cl.: G01F 23/00, G01F 23/284

(54) **Verfahren zur Zustandsüberwachung eines nach dem Radar-Prinzip arbeitenden Füllstandmessgeräts und entsprechendes Füllstandmessgerät**
Method for monitoring the condition of a fill level measuring device operating according to the radar principle and corresponding fill level measuring device
Procédé de surveillance de l'état d'un appareil de mesure du niveau de remplissage fonctionnant selon le principe du radar et appareil de mesure du niveau de remplissage correspondant

(30) Priorität: 19.07.2012 DE 102012014267
(43) Veröffentlichungstag der Anmeldung: 22.01.2014
(73) Patentinhaber: Krohne S.A., 26103 Romans - Cedex (FR)
(72) Erfinder: Pichot, Vincent, 26100 Romans sur Isere (FR)
(74) Vertreter: Gesthuysen Patentanwälte

(56) Entgegenhaltungen:
- US-A1- 2007 115 196
- US-B1- 7 586 435
- US-B2- 7 855 676

## Beschreibung

Beschrieben ist ein Verfahren zur Zustandsüberwachung eines nach dem Radar-Prinzip arbeitenden Füllstandmessgeräts, wobei das Füllstandmessgerät mindestens eine Sende-/Empfangseinheit zum Senden und Empfangen von elektromagnetischen Signalen aufweist, wobei das Füllstandmessgerät mindestens eine Antenne zum Leiten, Abstrahlen und Empfangen der elektromagnetischen Signale aufweist, wobei die Antenne mindestens einen Innenraum aufweist, und wobei die Antenne durch eine Übertragungscharakteristik hinsichtlich der Übertragung von elektromagnetischen Signalen charakterisiert ist. Ferner betrifft die Erfindung ein nach dem Radar-Prinzip arbeitendes Füllstandmessgerät mit mindestens einer Sende-/Empfangseinheit zum Senden und Empfangen von elektromagnetischen Signalen, und mit mindestens einer Antenne zum Leiten, Abstrahlen und Empfangen der elektromagnetischen Signale, wobei die Antenne mindestens einen Innenraum aufweist, und wobei die Antenne durch eine Übertragungscharakteristik hinsichtlich der Übertragung von elektromagnetischen Signalen charakterisiert ist, wobei es sich bei dem Innenraum um den Innenraum innerhalb der Antenne des Füllstandmessgerätes zwischen einer ersten, dem Medium zugewandten Dichtung und einer zweiten Dichtung, die beispielsweise der Umwelt, Elektronikkomponenten oder einer entfernten Kontrollstelle zugewandt ist, handelt.

In der industriellen Messtechnik werden häufig Radarfüllstandmessgeräte eingesetzt, um den Füllstand von Medien wie beispielsweise Flüssigkeiten, Schüttgütern oder auch Schlämmen innerhalb von Behältern wie Tanks oder Silos zu bestimmen. Das durch die Messgeräte umgesetzte Laufzeitverfahren basiert auf der physikalischen Gesetzmäßigkeit, dass die Laufstrecke z. B. eines elektromagnetischen Signals gleich dem Produkt aus Laufzeit und Ausbreitungsgeschwindigkeit ist. Im Fall einer Messung des Füllstands eines Mediums - beispielsweise einer Flüssigkeit oder eines Schüttguts - in einem Behälter entspricht die Laufstrecke dem doppelten Abstand zwischen einer das elektromagnetische Signal abstrahlenden und wieder empfangenden Antenne und der Oberfläche des Mediums. Das Nutzechosignal - also das an der Oberfläche des Mediums reflektierte Signal - und dessen Laufzeit werden anhand der sog. Echofunktion bzw. der digitalisierten Hüllkurve bestimmt. Die Hüllkurve repräsentiert die Amplituden der Echosignale als Funktion des Abstandes "Antenne - Oberfläche des Mediums". Der Füllstand lässt sich aus der Differenz zwischen dem bekannten Abstand der Antenne zum Boden des Behälters und dem durch die Messung bestimmten Abstand der Oberfläche des Mediums zur Antenne berechnen. Bei den gesendeten und empfangenen elektromagnetischen Signalen handelt es sich zumeist um Mikrowellenstrahlung.

Häufig werden dielektrische Resonatoren als Antennen eingesetzt. Solche dielektrischen Antennen haben ein ähnliches Resonanzverhalten wie Hohlleiter, können aber, da sie nicht über metallische Wandungen verfügen, elektromagnetische Energie abstrahlen und damit als Antennen fungieren. Aus unterschiedlichen Bereichen der Technik ist dabei bereits eine Vielzahl von Bauformen bekannt, bei denen jeweils ein dielektrisches Material, z. B. eine Keramik, der Führung und Abstrahlung der elektromagnetischen Wellen dient. Meist werden verlustarme Materialien mit niedriger Permittivität (eine andere Bezeichnung für die Permittivität ist dielektrische Leitfähigkeit) benutzt. Verwendet werden beispielsweise Teflon oder Polypropylen. Eine weitere Variante besteht darin, dass die Mikrowellensignale entlang eines Seiles oder eines Stabes geführt werden.

Messgeräte sind üblicherweise gegen den Prozess bzw. gegen das Medium, dessen Füllstand zu messen ist, abgedichtet. Je nach Einsatzfall kann eine zusätzliche Kapselung des Messgerätes gegenüber einer entfernten Kontrollstelle bzw. gegenüber einer vom Prozess abgesetzten Elektronikeinheit erforderlich sein. Besonders wichtig ist eine solche zweite Abdichtung bzw. Abkapselung, wenn es sich beispielsweise um aggressive, umweltschädliche oder explosionsgefährliche Medien handelt oder wenn in den Prozessen hohe Drücke oder hohe Temperaturen vorliegen. Hornantennen für nach dem Radar-Prinzip arbeitende Füllstandmessgeräte, die mit einem Schutz versehen sind und somit die Öffnung der Antenne verschließen, finden sich beispielsweise in der Offenlegungsschrift US 2003/0151560 A1. Eine bekannte Methode zu überprüfen, ob die dem Medium zugewandte Abdichtung dicht ist, besteht darin, zwischen den beiden Abdichtungen eine Öffnung, z. B. ein Loch in dem Gehäuse vorzusehen, durch welches das Medium oder eine im Behälter befindliche Gasmischung bei einer Leckage aus dem Gehäuse entweicht und somit ein offensichtliches Signal gibt. Bei gefährlichen und/oder umweltschädlichen Substanzen ist ein solches Vorgehen jedoch bedenklich bzw. bei Hygieneanwendungen im Lebensmittel- oder Pharmabereich kaum akzeptabel. Andere Überwachungsmöglichkeiten finden sich in den Offenlegungsschriften DE 103 52 471 A1 oder DE 10 2007 052 395 A1.

Für Füllstandmessgeräte, die nach dem Radar-Prinzip arbeiten, beschreibt die Patentschrift US 7,855,676 B2 eine Überwachungsmethode, bei der ein beweglicher Körper in einem hohlen Wellenleiter zwischen einer abgedichteten Hornantenne und einer Elektronikeinheit angeordnet ist. Sollte das Medium durch eine Leckage in den Wellenleiter eindringen, so würde sich der Körper verschieben und dadurch die Übertragungscharakteristik des Wellenleiters ändern. Diese Ausgestaltung ist jedoch aufwändig.

Die Druckschrift US 7 586 435 B1 betrifft ein Radarsystem zur Füllstandmessung mit periodisch angeordneten Impedanzübergängen an dem Wellenleiter, sodass das gesendete Signal an jedem Impedanzübergang reflektiert wird. Dabei kann der Wellenleiter beispielsweise als Koaxialsonde mit Distanzhaltern ausgebildet sein.

Zudem ist aus dem Dokument US 2007/115196 A1 ein Radarfüllstandmessgerät mit einem mikrowellendurchlässigen Dichtungselement bekannt, wobei das Dichtungselement als Linse ausgebildet ist.

Der Erfindung liegt daher die Aufgabe zugrunde, ein nach dem Radar-Prinzip arbeitendes Füllstandmessgerät vorzuschlagen, wobei die Überwachung der dem Medium zugewandten Dichtung einfacher als im Stand der Technik ist.

Die aufgezeigte Aufgabe ist bei dem in Rede stehenden Verfahren zunächst und im Wesentlichen dadurch gelöst, dass die elektromagnetischen Signale zumindest teilweise in Richtung eines Wandabschnitts des Innenraums der Antenne abgestrahlt oder geleitet werden, dass die empfangenen elektromagnetischen Signale in Hinsicht auf die Übertragungscharakteristik der Antenne ausgewertet werden, und dass das Ergebnis der Auswertung mit mindestens einem abgespeicherten Vergleichswert verglichen wird. Bei dem Innenraum handelt es sich insbesondere um den Innenraum innerhalb der Antenne des Füllstandmessgerätes zwischen der ersten, dem Medium zugewandten Dichtung und der zweiten Dichtung, die beispielsweise der Umwelt, Elektronickomponenten oder einer entfernten Kontrollstelle zugewandt ist. Dringt das Medium, insbesondere in Folge einer Leckage der ersten Dichtung in den Innenraum ein, so verändert sich bei einer passenden Abstimmung zwischen dem Medium, einem Medium innerhalb des Innenraums und der Beschaffenheit des Wandabschnitts die Übertragungscharakteristik der Antenne. Letztere wird insbesondere dadurch ermittelt, dass die elektromagnetischen Signale als Anregungssignal in Richtung des angegebenen Wandabschnitts emittiert bzw. geführt oder gerichtet werden bzw. sind. In einer Ausgestaltung ist die Abstrahl- bzw. Leitungsrichtung permanent auf den Wandabschnitt gerichtet, d. h. der Wandabschnitt liegt in der Richtung, in der auch für die normalen Messungen des Füllstands die elektromagnetischen Signale gesendet bzw. geführt werden. In einer alternativen Ausgestaltung werden die Signale nur temporär für die Überwachung der Dichtung in Richtung des Wandabschnitts geleitet bzw. abgestrahlt. In einer weiteren Ausgestaltung ist der Wandabschnitt Teil der ersten Dichtung in Richtung des Prozessmediums. In dieser Ausgestaltung wird ausgenutzt, dass sich durch den Wandabschnitt beispielsweise ein besonderes Charakteristikum in den empfangenen elektromagnetischen Signalen ergibt und dass dieses Charakteristikum fehlt oder sich deutlich verändert, wenn die Dichtung beschädigt ist. Die Änderung des Charakteristikums kann in einer Variante darauf zurückzuführen sein, dass der Wandabschnitt selbst beschädigt und/oder in seiner Position oder Orientierung geändert ist. In einer anderen Variante ergeben sich Modifikationen dadurch, dass fremdes Medium aus dem Prozess in den Innenraum eintritt bzw. dass das Medium, das sich in dem Innenraum befindet, aus diesem durch einen Bruch der Dichtung entweicht. In einer weiteren Ausgestaltung ist der Innenraum mit insbesondere trockener Luft als Medium gefüllt. In einer alternativen Ausgestaltung ist der Innenraum evakuiert. Die Erfindung zeichnet sich insgesamt durch einen einfachen und damit auch kostengünstigen Aufbau aus. In einer Ausgestaltung wird für die Überwachung während einer Initialisierungsmessung mindestens ein Vergleichswert abgespeichert.

Erfindungsgemäß besteht bei einem eingangs genannten nach dem Radar-Prinzip arbeitenden Füllstandmessgerät mindestens ein Wandabschnitt des Innenraums zumindest teilweise aus einer - insbesondere eine geringe Permittivität aufweisende - Keramik. Das Füllstandmessgerät ist insbesondere für die Umsetzung des zuvor beschriebenen Verfahrens geeignet. Alternativ können jedoch auch andere Verfahren angewendet werden bzw. ist es sogar möglich, dass auf eine zweite Dichtung gänzlich verzichtet wird. Eine Keramik hat den Vorteil, dass sie vielen unterschiedlichen, z. B. aggressiven Medien und Prozessbedingungen wie z. B. hohen Temperaturen ausgesetzt werden kann. Der Wandabschnitt ist insbesondere zumindest teilweise derartig ausgestaltet, dass er zumindest teilweise elektrisch leitfähig ist. In einer Ausgestaltung ist in dem Wandabschnitt mindestens ein elektrischer Leiter, z. B. aus einem Metall angeordnet.

Erfindungsgemäß besteht der Wandabschnitt zumindest teilweise aus einem Verbundmaterial und erfindungsgemäß zumindest teilweise aus einem in einer metallischen Matrix eingebundenen keramischen Werkstoff. Bei dem letzteren Verbundwerkstoff handelt es sich um ein Cermet (zusammengesetzt aus den englischen Bezeichnungen ceramic und metal), das sich insbesondere durch hohe Härte und Verschleißfestigkeit auszeichnet. Cermets gelten dabei im Allgemeinen als Nichtleiter. Die keramischen Komponenten sind beispielsweise Aluminiumoxid oder Zirconiumdioxid, wobei es sich bei der metallischen Komponente ggf. um Niob, Molybdän, Titan, Kobalt, Zirconium oder Chrom handelt.

Eine besonders vorteilhafte Ausgestaltung besteht darin, dass dem Wandabschnitt gegenüber eine zweite Dichtung angeordnet ist, dass durch den Innenraum mindestens ein elektrischer Leiter geführt ist, und dass der Innenraum um den elektrischen Leiter - insbesondere koaxial - herum eine elektrisch leitfähige Wand aufweist. Der Innenraum ist in einer Ausgestaltung evakuiert und in einer alternativen Variante mit trockener Luft gefüllt. Im Allgemeinen ist der Innenraum mit einem Medium gefüllt, das bei der Ausgestaltung als Dielektrikum fungiert. In einer zusätzlichen Ausgestaltung ist die zweite Dichtung im Wesentlichen wie der Wandabschnitt ausgestaltet, d. h. insbesondere aus einer Keramik bestehend. Die elektrisch leitfähige Wand wird beispielsweise durch eine metallische oder mit einem Metall beschichtete Wand gebildet. Ist der Innenraum im Fehlerfall nicht mehr abgedichtet, d. h. tritt ein anderes Medium in den Innenraum ein oder entweicht das Medium aus dem Innenraum, so ändert sich auch die Dielektrizitätszahl, wodurch sich die elektromagnetischen Wellen mit einer - gegenüber dem fehlerfreien Zustand mit unbeschädigter Dichtung - anderen Geschwindigkeit ausbreiten bzw. wodurch sich die Übertragungscharakteristik der Antenne als Ganzes ändert. Ist im Normalfall die dielektrische Leitfähigkeit des Mediums im Innenraum im Wesentlichen gleich eins, so verlangsamt sich die Ausbreitungsgeschwindigkeit mit der Quadratwurzel aus der dielektrischen Leitfähigkeit des Mediums oder Mediumgemisches, das sich bei einer gebrochenen Dichtung im Innenraum einstellt. Dabei dient der Innenraum der Antenne in dieser Ausgestaltung insbesondere der Übertragung der elektromagnetischen Signale. Diese Ausgestaltung lässt sich auch derartig beschreiben, dass sich hinter der ersten Dichtung und somit hinter dem Wandabschnitt aus Keramik (in einer alternativen Variante besteht der Wandabschnitt aus einem Material unterschiedlich zu einer Keramik) ein Raum befindet, in dem sich die elektromagnetischen Wellen ausbreiten und der mit einer zweiten Dichtung abgeschlossen wird. Da der Innenraum als Dielektrikum fungiert und da der Innenraum über eine defekte Dichtung im Bereich des Wandabschnitts mit dem Prozessraum in Verbindung steht und sich dadurch die relative Dielektrizitätszahl des Dielektrikums ändert, führt ein Bruch der Dichtung zu einer anderen Übertragungscharakteristik, was als Indikator für den Zustand der Dichtung verwendet werden kann.

In einer Ausgestaltung ist der Wandabschnitt an zwei Seiten plan ausgestaltet. Dabei handelt es sich insbesondere um die einander gegenüberliegenden Seiten, die dem Medium bzw. dem Innenraum zugewandt sind.

In einer Ausgestaltung ist der Wandabschnitt von einer Metallschicht oder einem Metallring umgeben. Ist der Wandabschnitt beispielsweise mit Titan verbunden, so kann der Wandabschnitt als Ganzes beispielsweise auch mit rostfreiem Stahl verschweißt werden. Durch ein Kontaktieren des Wandabschnitts mit einem Flansch oder mit einem Teil eines Behälters oder eines Rohres etc. kann der Innenraum der Antenne teilweise auch durch diese zusätzlichen Elemente gebildet werden. In der zuvor genannten Ausgestaltung erlaubt eine Metallschicht auch die elektrische Kontaktierung mit der elektrisch leitfähigen Wand, die in einer Ausgestaltung zumindest teilweise ebenfalls aus einem Metall besteht. In einer Ausgestaltung ist durch den Wandabschnitt ein elektrischer Leiter für die Leitung von elektromagnetischen Signalen hindurchgeführt und beispielsweise über metallische Pins befestigt.

In einer vorteilhaften Ausgestaltung ist für die Ausführung des oben beschriebenen Verfahrens zur Zustandsüberwachung eine entsprechend ausgestaltete Steuereinheit vorgesehen. In einer Variante ist die Steuereinheit zum Auswerten der empfangenen elektromagnetischen Signale in Hinsicht auf die Übertragungscharakteristik der Antenne ausgestaltet. Zudem ist in einer weiteren Ausgestaltung mindestens eine Speichereinheit zum Abspeichern mindestens eines Vergleichswerts vorgesehen. Der Vergleichswert wird in einer Variante vorzugsweise während der oben angegebenen Initialisierungsphase ermittelt.

Im Einzelnen gibt es eine Vielzahl von Möglichkeiten, die Antenne und das erfindungsgemäße Füllstandmessgerät auszugestalten und weiterzubilden. Dazu wird verwiesen einerseits auf die dem Patentanspruch 1 nachgeordneten Patentansprüche, andererseits auf die folgende Beschreibung von Ausführungsbeispielen in Verbindung mit der Zeichnung. In der Zeichnung zeigen
- Fig. 1: eine schematische, im Wesentlichen die funktionalen Wirkzusammenhänge verdeutlichende Darstellung eines Füllstandmessgerätes als Blockschaltung im Schnitt gemäß einer ersten Variante und
- Fig. 2: eine schematische, im Wesentlichen die funktionalen Wirkzusammenhänge verdeutlichende Darstellung eines Füllstandmessgeräte im Schnitt gemäß einer zweiten Variante mit darunter rein schematisch dargestellten Signalverläufen für zwei unterschiedliche Fälle.

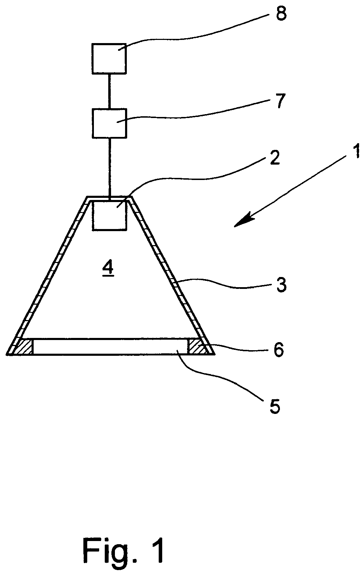

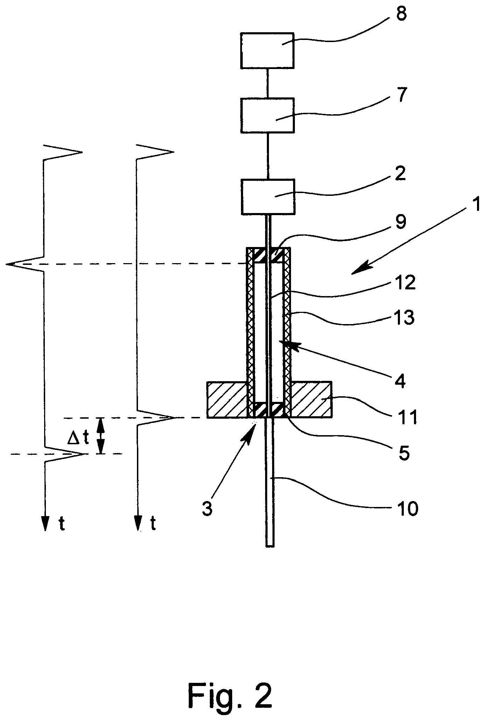

In Fig. 1 und Fig. 2 ist jeweils ein Schnitt durch jeweils ein schematisch dargestelltes erfindungsgemäßes Füllstandmessgerät 1 dargestellt. In der Fig. 2 sind zusätzlich zwei Signalverläufe schematisch angedeutet.

Die Fig. 1 zeigt ein erfindungsgemäßes Füllstandmessgerät 1. Von der Sende-/Empfangseinheit 2 werden elektromagnetische Signale erzeugt und insbesondere nach der Reflexion an der Oberfläche des - hier nicht dargestellten - Mediums, dessen Füllstand zu ermitteln ist, wieder empfangen. Dabei handelt es sich insbesondere um Mikrowellensignale. Dem Leiten, der Abstrahlung und dem Empfang der Signale dient eine Antenne 3, die in der dargestellten Variante als Hornantenne ausgeführt ist und die hier in ihrer Aufweitung einen Innenraum 4 aufweist, der in Richtung des - hier nicht dargestellten - Mediums von einem Wandabschnitt 5 begrenzt wird. Der Wandabschnitt 5 besteht dabei insbesondere aus einem sogenannten Cermet, d. h. einem Verbundwerkstoff auf einer Keramik und einem Metall. Umfasst ist der hier kreisförmige Wandabschnitt 5 von einem Metallring 6, der der Anbindung an die Antenne 3 dient. Der Innenraum 4, der an einer Seite von der Sende-/Empfangseinheit 2 begrenzt wird, ist in der gezeigten Ausgestaltung mit Luft gefüllt. Die Steuereinheit 7 dient der Steuerung der Sende-/Empfangseinheit 2 und wertet dabei beispielsweise auch die empfangenden Signale in Hinsicht auf die Übertragungscharakteristik der Antenne 3 aus. Hierfür findet ggf. auch ein Zugriff auf die Speichereinheit 8 statt, in der mindestens ein Vergleichswert für die Beurteilung der Übertragungscharakteristik hinterlegt ist. Dringt aus dem Prozess eine Flüssigkeit, ein Gas, Staub oder ähnliches in den Innenraum 4 ein, so verändert sich die Übertragungscharakteristik der Antenne 3, was bei der Auswertung deutlich und identifizierbar wird.

In der Fig. 2 ist eine andere Art der Antenne 3 dargestellt. Dabei handelt es sich um ein Füllstandmessgerät 1 mit einem an einer Sonde 10 geführten Mikrowellensignal. In dieser Variante breitet sich das Signal nicht frei im Raum, z. B. in dem Behälter, in dem sich das Medium befindet, aus, sondern es wird an der Sonde 10 entlang geführt. Der Innenraum 4 der Antenne 3, der hier insbesondere dem Leiten der elektromagnetischen Signale dient, liegt in der gezeigten Variante hinter dem Prozessabschluss, der durch den Wandabschnitt 5 im Flansch 11 gebildet wird. Die elektromagnetischen Signale werden in diesem Innenraum 4 ausgehend von der Sende-/Empfangseinheit 2 über den elektrischen Leiter 12 geführt, der in dem aus Cermet bestehenden Wandabschnitt 5 in einer Variante über zwei Pins befestigt ist. Dem Wandabschnitt 5 aus Cermet liegt in der dargestellten zweiten Variante eine zweite Dichtung 9 gegenüber, die in der gezeigten Ausgestaltung ebenfalls aus einem Cermet besteht. Umfasst wird der Innenraum 4 seitlich und dabei koaxial von einer elektrisch leitfähigen Wand 13, die beispielsweise von einem Metall gebildet ist. Die elektromagnetischen Wellen können sich in diesem speziellen Innenraum 4 ausbreiten, der in dem gezeigten Beispiel mit trockener Luft gefüllt sei, so dass das Dielektrikum des Innenraums 4 im Normalfall eine relative Dielektrizitätskonstante von 1 aufweist. Die Steuereinheit 7 und die Speichereinheit 8 sind wie in der Variante der Fig. 1 ausgestaltet und übernehmen die gleichen Aufgaben.

Links von der Anordnung der Fig. 2 sind zwei Signalverläufe in Abhängigkeit von der Zeit t schematisch dargestellt. Der innere Signalverlauf ergibt sich, wenn die erste Dichtung, die durch den Wandabschnitt 5 gegeben ist, in Ordnung, d. h. unbeschädigt ist. Das obere Signal ist das Anregungssignal als Nullmarke. Das nächste Signal auf Höhe des Endes des Wandabschnitts 5 ergibt sich durch den Übergang der elektromagnetischen Welle aus dem Innenraum 4 hinein in den Prozessraum, in den die Sonde 10 hineinragt. Dabei sei - zumindest für die Betrachtung - die Impedanz des Wandabschnitts 5 und der zweiten Dichtung 9 gleich der Impedanz des Dielektrikums im Innenraum 4. Ist die Dichtung defekt, so tritt beispielsweise das zu überwachende Medium aus dem Prozessraum in den Innenraum 4 ein. Damit ändert sich die relative dielektrische Konstante im Innenraum 4, was insbesondere zu einer - hier herabgesetzten - Ausbreitungsgeschwindigkeit der elektromagnetischen Signale im Innenraum 4 führt. Die Änderung ergibt sich dabei in Abhängigkeit von der Quadratwurzel aus der relativen Dielektrizitätskonstanten des Dielektrikums, das nach dem Bruch der Dichtung den Innenraum 4 ausfüllt. Die Verlangsamung der Ausbreitung der elektromagnetischen Signale lässt sich daher im äußeren Signalverlauf daran erkennen, dass das Signal durch den Übergang von Innen- zu Prozessraum später erscheint als im Zustand der funktionierenden Abdichtung. Weiterhin ergibt sich noch ein zusätzliches Signal beim Übergang zwischen der zweiten Dichtung 9 und dem Innenraum 4. Das Signalmuster hat sich somit durch die Leckage deutlich verändert und die Übertragungscharakteristik der Antenne 3 ist eine andere geworden. Wird dieses Muster des äußeren Signalverlaufs mit dem abgespeicherten Muster des inneren Verlaufs verglichen, so ist offensichtlich, dass sich etwas ereignet haben muss, das eine solche Änderung bewirken kann, und dies muss eine Leckage sein. Daher kann aus der Änderung der Übertragungscharakteristik auf das Brechen der Dichtung geschlossen werden.

## Patentansprüche

1. Nach dem Radar-Prinzip arbeitendes Füllstandmessgerät (1), mit mindestens einer Sende-/Empfangseinheit (2) zum Senden und Empfangen von elektromagnetischen Signalen und mit mindestens einer Antenne (3) zum Leiten, Abstrahlen und Empfangen der elektromagnetischen Signale, wobei die Antenne (3) mindestens einen Innenraum (4) aufweist, und wobei die Antenne (3) durch eine Übertragungscharakteristik hinsichtlich der Übertragung von elektromagnetischen Signalen charakterisiert ist, wobei es sich bei dem Innenraum (4) um den Innenraum (4) innerhalb der Antenne (3) des Füllstandmessgerätes (1) zwischen einer ersten, dem Medium zugewandten Dichtung und einer zweiten Dichtung (9), die beispielsweise der Umwelt, Elektronikkomponenten oder einer entfernten Kontrollstelle zugewandt ist, handelt,
**dadurch gekennzeichnet,**
**dass** mindestens ein Wandabschnitt (5) des Innenraums (4) zumindest teilweise aus einer - insbesondere eine geringe Permittivität aufweisenden - Keramik besteht, dass der Wandabschnitt (5) Teil der ersten Dichtung in Richtung des Prozessmediums ist und dass der Wandabschnitt (5) zumindest teilweise aus einem Verbundmaterial besteht und
**dass** der Wandabschnitt (5) zumindest teilweise aus einem in einer metallischen Matrix eingebundenen keramischen Werkstoff besteht.

2. Füllstandmessgerät (1) nach Anspruch 1, **dadurch gekennzeichnet, dass** dem Wandabschnitt (5) gegenüber die zweite Dichtung (9) angeordnet ist, dass durch den Innenraum (4) mindestens ein elektrischer Leiter (12) geführt ist, und dass der Innenraum (4) um den elektrischen Leiter (12) - insbesondere koaxial - herum eine elektrisch leitfähige Wand (13) aufweist.

3. Füllstandmessgerät (1) nach einem der Ansprüche 1 bis 2, **dadurch gekennzeichnet, dass** der Wandabschnitt (5) von einer Metallschicht oder einem Metallring (6) umgeben ist.

## Claims

1. Fill level measuring device (1) operating according to the radar principle having at least one transceiver unit (2) for transmitting and receiving electromagnetic signals and having at least one antenna (3) for guiding, radiating and receiving electromagnetic signals, wherein the antenna (3) has at least one interior space (4), and wherein the antenna (3) is **characterized by** a transmission characteristic with regard to the transmission of electromagnetic signals, wherein the interior space (4) is the inner space (4) within the antenna (3) of the fill level measuring device (1) between a first seal facing the medium and a second seal (9) facing, for example, the surroundings, electronics components or a remote control station,
**characterized in**
**that** at least one wall section (5) of the interior space (4) consists at least partially of a ceramic - having, in particular, a low permittivity, that the wall section (5) is part of the first seal in the direction of the process medium and that the wall section (5) consists at least partly of a composite material, and that the wall portion (5) consists at least partially of a bound ceramic material in a metallic matrix.

2. Fill level measuring device (1) according to claim 1, **characterized in that** the wall section (5) is arranged opposite to a second seal (9), that at least one electrical conductor is led (12) through the interior space (4), and that the interior space (4) has an electrically conductive wall (13) around - in particular coaxially - the electrical conductor (12).

3. Fill level measuring device (1) according to any one of claims 1 to 2, **characterized in that** the wall section (5) is surrounded by a metal layer or a metal ring (6).

## Revendications

1. Appareil de mesure de niveau de remplissage (1) fonctionnant selon le principe du radar, comprenant au moins une unité d'émission/réception (2) pour émettre et recevoir des signaux électromagnétiques, et au moins une antenne (3) pour acheminer, rayonner et recevoir les signaux électromagnétiques, l'antenne (3) présentant au moins un espace intérieur (4), et l'antenne (3) étant **caractérisée** en termes de transmission de signaux électromagnétiques par une caractéristique de transmission, l'espace intérieur (4) étant l'espace intérieur (4) à l'intérieur de l'antenne (3) de l'appareil de mesure de niveau de remplissage (1) entre un premier joint d'étanchéité tourné vers le milieu et un deuxième joint d'étanchéité (9) qui est tourné par exemple vers l'environnement, vers des composants électroniques ou vers un point de contrôle distant,
**caractérisé en ce qu'**au moins une section de paroi (5) de l'espace intérieur (4) est composée au moins partiellement d'une céramique, présentant en particulier une faible permittivité, **en ce que** la section de paroi (5) fait partie du premier joint d'étanchéité en direction du milieu de processus, et **en ce que** la section de paroi (5) est composée au moins partiellement d'un matériau composite, et **en ce que** la section de paroi (5) est composée au moins partiellement d'un matériau céramique incorporé dans une matrice métallique.

2. Appareil de mesure de niveau de remplissage (1) selon la revendication 1, **caractérisé en ce que** le deuxième joint d'étanchéité (9) est disposé à l'opposé de la section de paroi (5), **en ce qu'**au moins un conducteur électrique (12) est acheminé à travers l'espace intérieur (4), et **en ce que** l'espace intérieur (4) présente autour du conducteur électrique (12) - en particulier de manière coaxiale - une paroi (13) électriquement conductrice.

3. Appareil de mesure de niveau de remplissage (1) selon l'une quelconque des revendications 1 à 2, **caractérisé en ce que** la section de paroi (5) est entourée d'une couche de métal ou d'un anneau de métal (6) .
